# EUROPEAN PATENT SPECIFICATION

(11) **EP 2 747 038 B1**
(45) Date of publication and mention of the grant of the patent: **30.05.2018**
(21) Application number: 12197758.1
(22) Date of filing: 18.12.2012
(51) Int. Cl.: G07C 5/08, F02D 41/22

(54) **System for the predictive diagnosis of sensor-related anomalies on vehicles**
System für die prädiktive Diagnose von sensorbezogenen Anomalien bei Fahrzeugen
Système de diagnostic prédictif des anomalies liées au capteur sur des véhicules

(43) Date of publication of application: 25.06.2014
(73) Proprietor: IVECO S.p.A., 10156 Torino (IT)
(72) Inventor: Labella, Saverio, 10034 CHIVASSO (IT); Lomaestro, Massimo, 10045 PIOSSASCO (IT); Varalda, Orlando, 10088 VOLPIANO (IT)
(74) Representative: Franzolin, Luigi

(56) References cited:
- WO-A1-2009/038803
- US-A1- 2003 000 308
- US-A1- 2010 191 413
- US-B1- 6 625 527

## Description

### Application field of the invention

The present invention refers to the field of diagnosis of anomalies registered by vehicle control units, which in some cases are due to sensor anomalies, the functionalities of vehicle control units being based on sensor measurements, in particular of vehicles comprising an internal combustion engine.

An example of method for monitoring two redundant sensors is given in US6625527.

### Description of the prior art

Vehicle control unit manage functions.

The algorithms running on vehicle control units use the information received from sensors to manage such functions. When one of the sensors is subject to a malfunctioning, namely it is subject to drifts, the vehicle control unit, for example the engine control unit, may be misled and will control in an incorrect way the functions relating to such sensor or it will notify anomalies.

When an anomaly is notified, the first thing that is generally done is to analyze the vehicle control unit itself, after that, in case of further problems, the functionalities of the single sensors and of their respective wiring are analyzed.

This implies, of course, a remarkable waste of the operators' time and a stop of the vehicle that can occur again and again until the sensor that determined the malfunctioning and the possible anomaly detection is identified.

Moreover, it has to be noted that some faulty sensors may behave in an unpredictable way and that some operating conditions of the vehicle may need the exclusion of some functionalities, thus the detected anomalies may be unpredictable and difficult to be monitored systematically.

### Summary of the invention

Therefore the aim of the present invention is to overcome all the drawbacks deriving from faulty sensors that are difficult to diagnose.

A method for the predictive diagnosis of sensor-related anomalies is object of the present invention, according to claim 1.

Hereinafter, the expression "similar sensors" will refer to those sensors which measure the same magnitude, although some sensors are constructively realized to have specific tolerances and others to resist to specific temperatures or to have specific dynamics.

By virtue of the present invention, a vehicle control unit, according to the present method, monitors a sensor over time by means of at least another similar sensor and detects any possible drift.

When a comparison is made among three of more sensors, the sensor that is subject to a drift can be detected immediately, otherwise just an incoherence between two sensors will be detected. According to the present invention, such comparison is performed in specific operating conditions of the vehicle such as when the engine is stopped or has been stopped for a predetermined number of hours.

Therefore, according to another embodiment of the present invention, the measurement acquisition is performed only when the right preconditions are verified.

According to another preferred alternative embodiment of the invention, the control unit, interfacing with the on-board instruments, can send a message to the driver about the detection of such drift.

According to another preferred alternative embodiment of the invention, the control unit comprises means to store the measurements made by said similar sensors associated to their respective functions based on such measurements. In particular, the control unit, by interfacing with the on-board instruments, may estimate and inform the driver about the anomalies that will presumably occur in the future due to such drifts.

The control unit can possibly show also an estimation of the remaining time before registering/reporting such anomalies, on the basis of the time spent for detecting such drift.

According to the technique known in the art, anomalies are detected, registered and possibly reported when the functionality is already compromised.

On the contrary, according to the present invention, such anomalies are detected before affecting negatively the vehicle's functionalities and thus even before the same anomalies are detected by other algorithms. This is particularly relevant above all when, as said above, such anomalies have an unpredictable behavior.

A vehicle may have one or more vehicle control units that control various vehicle functions. In general, when the control units are more than one, they are interconnected by means of a vehicle network. A control unit that receives, by means of the vehicle network, messages containing sensors measurements that are not directly related to the functionalities it implements, generally discards such messages, or uses such measurements as a redundancy/correction of sensor measurements related with the same functionalities managed by the control unit. This happens until the engine is operating. According to a preferred alternative embodiment of the present invention, such comparisons are performed when the engine is stopped, therefore they do not aim to correct the aforementioned functionalities, but to evaluate the correct functioning of the sensors. This often happens in different operation fields from the ones wherein the sensors have to operate when the aforementioned functionalities are operating. According to the present invention, the control unit that is in charge of implementing such method has to consider all the measurements of similar sensors, performing comparisons among such measurements and monitoring possible variations over time of said comparisons.

For example, the exhaust gas treatment system may comprise one or more temperature sensors. Also the air conditioner may comprise at least a temperature sensor. When the vehicle has been stopped for a predetermined number of hours, both sensors presumably measure approximately the same temperature. Thus, after a certain number of hours from the engine stop, a predetermined condition is defined wherein the comparison between temperature measurements performed by the sensor of the air conditioner and by the sensor(s) of the exhaust gas treatment system is meaningful.

The possible drift of one of such sensors can be monitored by making comparisons over time.

In other words, according to the present invention, comparisons of similar sensors are compared.

Another object of the present invention is a device for the predictive diagnosis of anomalies relating to vehicle sensors.

A further object of the present invention is a ground vehicle comprising a device for the predictive diagnosis of anomalies relating to vehicle sensors.

Preferred embodiments of the invention will be described more fully in the claims, which are an integral part of the present description.

### Brief description of the Figures

Further purposes and advantages of the present invention will become clear from the following detailed description of a preferred embodiment (and of its alternative embodiments) and the drawings that are attached hereto, which are merely illustrative and non-limitative, in which:
figure 1 shows a logic diagram of the components involved in realizing the present invention;
figure 2 shows an example of block diagram defining a preferred alternative embodiment of the method of the present invention.

In the figures the same reference numbers and letters identify the same elements or components.

### Detailed description of preferred embodiments of the invention

The method that is object of the invention is now described. According to such method, when the necessary preconditions occur, measurements made by similar sensors are acquired and compared between each other. The results of such comparisons are stored and compared with one or more previous results, in order to detect variations, namely drifts, of at least one of the similar sensors.

It is necessary to have at least two similar sensors. It is evident that if there are just two similar sensors, it is not possible to discriminate which one of the two sensors is determining the drifts of the measurements.

On the contrary, when three or more similar sensors are available, the sensor that has started creating problems can be immediately isolated.

According to a preferred alternative embodiment of the invention, the operating conditions wherein said measurements are acquired for making one or more comparison can be pre-stored.

For example, in order to compare the temperature by a sensor inserted in the exhaust gas treatment system, it is necessary to wait until such system cools down, if, for example, its measurements are compared with the measurements of an ambient temperature sensor.

Similarly, if a pressure sensor is present at the intake and at the exhaust, it is necessary to wait until the engine is at least stopped, before comparing the pressure measurements of such sensors.

If it is estimated that the pressure sensor at the exhaust can be influenced by the engine temperature, then the comparison is performed after a certain number of hours, for example 5, from the engine stop.

According to a further preferred alternative embodiment of the invention, one or more anomalies can be associated to a drift of one sensor. Thus, a warning message can be stored and possibly sent to the driver which contains the possible anomalies that will occur in the future due to the drift of one of the vehicle sensors.

As an alternative, or in addition to such example, the message can be made available to an authorized operator by connecting an appropriate diagnosis apparatus suitable to be connected to the vehicle control unit or to the vehicle network.

In general the vehicle network is of the CAN type.

It can also be possible to estimate, on the basis of a tendency that can be obtained from the stored comparisons, within how much time an anomaly will occur.

According to a preferred alternative embodiment of the invention, the comparison between temperature sensors is made taking as a reference the temperature sensor of the urea-based liquid used for reducing the NOx in the exhaust treatment systems.

The use of such sensor as a reference is particularly advantageous, since it is subject to a remarkable thermal inertia due to the water/urea solution in which it is immersed. This will be valid also if the solution was made of other chemical compounds, subject to the ambient temperature.

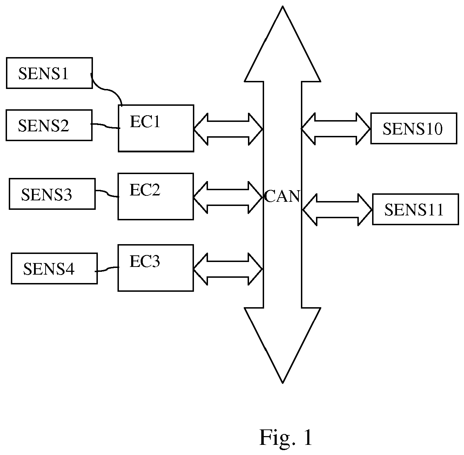

Figure 1 shows a CAN vehicle network to which several vehicle control units EC1, EC2, etc. are connected. Sensors SENS1, SENS2, etc.. may be connected to one of the control units, or they may be equipped with a CAN network interface, as well as the sensors SENS10, SENST11, etc..

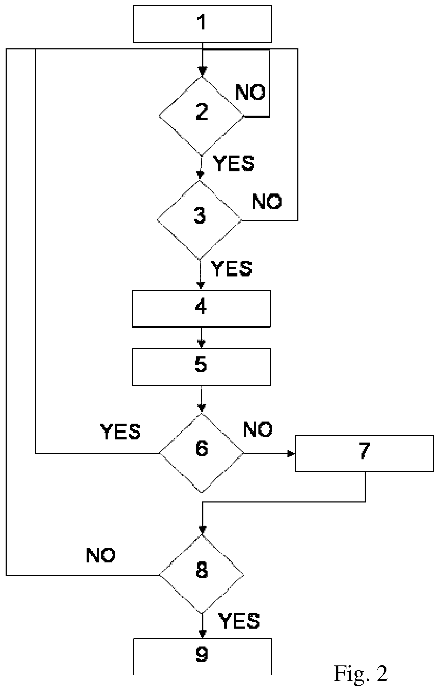

With reference to figure 2, a preferred embodiment of the method is shown below:
- (step 1) START waiting for an event;
- (step 2) if it is verified to be a key event in ON then;
- (step 3) if a time exceeding a predetermined threshold has passed from the last key event in OFF;
- (step 4) acquire measurements from a reference sensor and from at least another similar sensor, otherwise,
- if it is not a key event in ON or if the time passed does not exceed said predetermined threshold, go back to the beginning;
- (step 5) compare the measurement of said at least a similar sensor with the measurement of said reference sensor and store of said comparison as a current comparison;
- (step 6) if it is a first reading of the measurements go back to the beginning, otherwise
- (step 7) compare between the current comparison and a respective previous comparison;
- (step 8) if there was no variation between said current and previous comparisons go back to the beginning, otherwise
- (step 9) notify a problem relating to said at least a sensor.

When there is more than one sensor similar to the reference sensor, then the steps 5, 7 are 9 cycled on all the similar sensors.

The present invention may be realized by means of the vehicle control unit, possibly providing a suitable programming of the latter.

Thus, the present invention may advantageously be realized by means of a computer program, which comprises program code means performing all the steps of the method of claim 1, when said program is run on a computer. For this reason the scope of the present patent is meant to cover also said computer program and the computer-readable means that comprise a recorded message, such computer-readable means comprising the program code means for performing all the steps of the method of claim 1, when such program is run on a computer.

## Claims

1. Method for the predictive diagnosis of sensor-related anomalies of vehicles comprising the following steps:
- first acquisition of first simultaneous measurements from three or more similar sensors measuring the same magnitude;
- first comparison between said first measurements and storing of said first comparison;
- second acquisition of second simultaneous measurements from said three or more similar sensors;
- second comparison between said second measurements and storing of said second comparison;
- third comparison between said first and second comparisons in order to monitor possible variations over time of said comparisons and if there is a difference, notification of a problem relating to at least one of said three or more sensors, wherein said first and second acquisitions are performed only when the following specific condition is verified
- the engine is stopped and/or
- the engine has been stopped for at least a certain time.

2. Method according to claim 1, further comprising a preliminary step of associating to each one of said sensors one or more anomalies relating to a respective malfunctioning.

3. Method according to claim 2, wherein said notification includes a reference to said one or more anomalies.

4. Method according to any one of the previous claims, comprising the step of calculating a time tendency of said difference and of calculating a remaining time before an anomaly occurs according to a calculation method based on one of said measurements of said vehicle sensors.

5. Method according to claim 4, wherein said notification includes a reference to the remaining time before said anomaly occurs.

6. Method according to any one of the previous claims, wherein one of said similar sensors is taken as a reference, and wherein said comparisons are made only with respect to it.

7. Method according to claim 6, wherein said reference sensor is a temperature sensor, suitable to measure a temperature in a container for a water/urea-based additive or the like.

8. Method according to one of the preceding claims, comprising the following steps:
- (step 1) START waiting for an event;
- (step 2) if it is verified to be a key event in ON then
- (step 3) if a time exceeding a predetermined threshold has passed from the last key event in OFF;
- (step 4) acquire measurements from a reference sensor and from at least another similar sensor, otherwise,
- if it is not a key event in ON or if the time passed does not exceed said predetermined threshold, go back to the beginning;
- (step 5) compare the measurement of said at least a similar sensor with the measurement of said reference sensor and store of said comparison as a current comparison;
- (step 6) if it is a first reading of the measurements go back to the beginning, otherwise
- (step 7) compare between the current comparison and a respective previous comparison;
- (step 8) if there was no variation between said current and previous comparisons go back to the beginning, otherwise
- (step 9) notify a problem relating to said at least a sensor.

9. Device for the predictive diagnosis of sensor-related anomalies, **characterized in that** it comprises means for performing all the steps of any one of the previous claims from 1 to 8.

10. Computer program comprising program code means suitable for performing all the steps of any claim from 1 to 8, when such program is run on a computer.

11. Computer-readable means comprising a recorded program, said computer-readable means comprising program code means suitable for performing all the steps according to claims from 1 to 8, when said program is run on a computer.

12. Ground vehicle comprising an internal combustion engine (E) having a device according to claim 9.

## Patentansprüche

1. Verfahren zur prädiktiven Diagnose sensorbezogener Anomalien von Fahrzeugen, umfassend die folgenden Schritte:
- erste Erfassung erster gleichzeitiger Messungen von drei oder mehr gleichartigen Sensoren, welche die gleiche Größe messen;
- erster Vergleich zwischen den ersten Messungen und Speichern des ersten Vergleichs;
- zweite Erfassung zweiter gleichzeitiger Messungen dieser drei oder mehr gleichartigen Sensoren;
- zweiter Vergleich zwischen den zweiten Messungen und Speichern des zweiten Vergleichs;
- dritter Vergleich zwischen den ersten und zweiten Vergleichen zur Überwachung möglicher Abweichungen der Vergleiche über die Zeit, und im Fall des Auftretens einer Differenz, Benachrichtigung über ein Problem bezüglich des einen der drei oder mehr Sensoren, wobei die ersten und zweiten Ermittlungen lediglich dann durchgeführt werden, wenn die folgende bestimmte Bedingung erfüllt ist:
- der Motor ist angehalten, und/oder
- der Motor wurde für einen vorbestimmten Zeitraum angehalten.

2. Verfahren gemäß Anspruch 1, ferner umfassend einen vorbereitenden Schritt der Zuordnung von jedem der Sensoren zu einer oder mehreren Anomalien hinsichtlich einer entsprechenden Fehlfunktion.

3. Verfahren gemäß Anspruch 2, bei welchem die Benachrichtigung einen Bezug auf die eine oder mehrere Anomalien umfasst.

4. Verfahren gemäß einem der vorhergehenden Ansprüche, umfassend den Schritt der Berechnung einer zeitlichen Tendenz der Differenz und der Berechnung einer verbleibenden Zeit, bevor eine Anomalie auftritt, entsprechend einem Berechnungsverfahren auf Grundlage von einer der Messungen der Fahrzeugsensoren.

5. Verfahren gemäß Anspruch 4, bei welchem die Benachrichtigung einen Bezug auf die verbleibende Zeit umfasst, bevor die Anomalie auftritt.

6. Verfahren gemäß einem der vorhergehenden Ansprüche, bei welchem einer der gleichartigen Sensoren als Referenz verwendet wird, und die Vergleiche lediglich in Bezug darauf durchgeführt werden.

7. Verfahren gemäß Anspruch 6, bei welchem der Referenzsensor ein Temperatursensor ist, geeignet zur Messung einer Temperatur in einem Behälter für ein auf Wasser/Harnstoff basierendes Additiv oder dergleichen.

8. Verfahren gemäß einem der vorhergehenden Ansprüche, umfassend die folgenden Schritte:
- (Schritt 1) START: Warten auf ein Ereignis;
- (Schritt 2) Falls verifiziert ist, dass dies ein Schlüsselereignis ist, welches AKTIVIERT ist, dann
- (Schritt 3) Falls eine Zeit eine vorbestimmte Stelle überschreitet, welche verstrichen ist, seitdem das letzte Schlüsselereignis DEAKTIVIERT ist,
- (Schritt 4) Ermittle Messungen von einem Referenzsensor und von zumindest einem gleichartigen Sensor, andernfalls:
- Falls dies kein Schlüsselereignis ist, das AKTIVIERT ist, oder falls die verstrichene Zeit nicht die vorbestimmte Schwelle überschreitet: gehe zurück zum Anfang;
- (Schritt 5) Vergleiche die Messung des zumindest einen gleichartigen Sensors mit der Messung des Referenzsensors und speichere den Vergleich als einen aktuellen Vergleich;
- (Schritt 6) Falls dies ein erstes Auslesen der Messungen ist, gehe zurück auf Anfang, andernfalls:
- (Schritt 7) Vergleiche zwischen dem aktuellen Vergleich und einem jeweils vorhergehenden Vergleich;
- (Schritt 8) Falls keine Abweichung zwischen den aktuellen und vorhergehenden Vergleichen besteht, gehe zurück zum Anfang, andernfalls:
- (Schritt 9) Benachrichtige bezüglich eines Problems in Bezug auf den zumindest einen Sensor.

9. Vorrichtung zur prädiktiven Diagnose sensorbezogener Anomalien, **gekennzeichnet durch** Mittel zur Durchführung aller Schritte gemäß einem der vorhergehenden Ansprüche 1 bis 8.

10. Rechnerprogramm, umfassend Programmcodemittel, geeignet zur Durchführung aller Schritte von einem der Ansprüche 1 bis 8, wenn dieses Programm auf einem Rechner ausgeführt wird.

11. Rechnerlesbare Mittel, umfassend ein aufgezeichnetes Programm, welche rechnerlesbaren Mittel Programmcodemittel umfassen, geeignet zur Durchführung aller Schritte gemäß der Ansprüche 1 bis 8, wenn das Programm auf einem Rechner ausgeführt wird.

12. Landfahrzeug, umfassend einen inneren Verbrennungsmotor (E) umfassend eine Vorrichtung gemäß Anspruch 9.

## Revendications

1. Procédé de diagnostic prédictif d'anomalies de véhicules liées à un capteur comprenant les étapes suivantes :
- une première acquisition de premières mesures simultanées en provenance de trois capteurs similaires ou plus mesurant la même grandeur ;
- une première comparaison entre lesdites premières mesures et le stockage de ladite première comparaison ;
- une seconde acquisition de secondes mesures simultanées en provenance desdits trois capteurs similaires ou plus ;
- une deuxième comparaison entre lesdites secondes mesures et le stockage de ladite deuxième comparaison ;
- une troisième comparaison entre lesdites première et deuxième comparaisons afin de surveiller de possibles variations dans le temps desdites comparaisons
et s'il y a une différence, la notification d'un problème concernant au moins un desdits trois capteurs ou plus,
dans laquelle lesdites première et seconde acquisitions sont réalisées uniquement lorsque la condition spécifique suivante est vérifiée :
- le moteur est arrêté et/ou
- le moteur a été arrêté pendant au moins un certain temps.

2. Procédé selon la revendication 1, comprenant en outre une étape préliminaire consistant à associer à chacun desdits capteurs une ou plusieurs anomalies concernant un dysfonctionnement respectif.

3. Procédé selon la revendication 2, dans laquelle ladite notification inclut une référence auxdites une ou plusieurs anomalies.

4. Procédé selon l'une quelconque des revendications précédentes, comprenant l'étape consistant à calculer une tendance dans le temps de ladite différence et à calculer un temps restant avant qu'une anomalie survienne selon une méthode de calcul basé sur une desdites mesures desdits capteurs de véhicule.

5. Procédé selon la revendication 4, dans laquelle ladite notification inclut une référence au temps restant avant que ladite anomalie survienne.

6. Procédé selon l'une quelconque des revendications précédentes, dans laquelle un desdits capteurs similaires est pris en tant que référence et dans laquelle lesdites comparaisons sont faites uniquement par rapport à celui-ci.

7. Procédé selon la revendication 6, dans laquelle ledit capteur de référence est un capteur de température, approprié pour mesurer une température dans un récipient pour un additif à base d'eau/urée ou autre.

8. Procédé selon l'une quelconque des revendications précédentes, comprenant les étapes suivantes :
- (étape 1) DÉBUT d'attente d'un événement ;
- (étape 2) s'il est vérifié qu'il s'agit d'un événement clé en MARCHE alors
- (étape 3) si un temps excédant un seuil prédéterminé a expiré depuis le dernier événement clé à l'ARRÊT;
- (étape 4) acquérir des mesures d'un capteur de référence et d'au moins un autre capteur similaire, sinon,
- s'il n'y a pas d'événement clé en MARCHE ou si le temps expiré n'excède pas ledit seuil prédéterminé, revenir au commencement ;
- (étape 5) comparer la mesure dudit au moins capteur similaire à la mesure dudit capteur de référence et stocker ladite comparaison en tant que comparaison actuelle ;
- (étape 6) s'il y a une première lecture des mesures, revenir au commencement, sinon
- (étape 7) comparer la comparaison actuelle et une comparaison précédente respective ;
- (étape 8) s'il n'y avait pas de variation entre lesdites comparaisons actuelle et précédente, revenir au commencement, sinon
- (étape 9) notifier un problème concernant ledit au moins un capteur.

9. Dispositif de diagnostic prédictif d'anomalies liées à un capteur, **caractérisé en ce qu'**il comprend un moyen pour réaliser toutes les étapes selon l'une quelconque des revendications précédentes 1 à 8.

10. Programme d'ordinateur comprenant un moyen de code de programme approprié pour réaliser toutes les étapes selon l'une quelconque des revendications 1 à 8 lorsqu'un tel programme est exécuté sur un ordinateur.

11. Moyen lisible par ordinateur comprenant un programme enregistré, ledit moyen lisible par ordinateur comprenant un moyen de code de programme approprié pour réaliser toutes les étapes selon des revendications 1 à 8 lorsque ledit programme est exécuté sur un ordinateur.

12. Véhicule de base comprenant un moteur à combustion interne (E) ayant un dispositif selon la revendication 9.
